# EUROPEAN PATENT SPECIFICATION

(11) **EP 3 757 017 B1**
(45) Date of publication and mention of the grant of the patent: **13.12.2023**
(21) Application number: 19382536.1
(22) Date of filing: 26.06.2019
(51) Int. Cl.: B64D 47/02, F21S 41/16, G09F 21/10

(54) **VEHICLE COMPRISING A COMBINATION OF ACTIVE AND PASSIVE ILLUMINATION DEVICE**
FAHRZEUG MIT EINER KOMBINATION AUS AKTIVER UND PASSIVER BELEUCHTUNGSVORRICHTUNG
VÉHICULE COMPRENANT UNE COMBINAISON DE DISPOSITIFS D'ÉCLAIRAGE ACTIFS ET PASSIFS

(43) Date of publication of application: 30.12.2020
(73) Proprietor: Airbus Operations, S.L., 28906 Getafe (ES); Airbus Operations GmbH, 21129 Hamburg (DE)
(72) Inventor: DE BROUWER, Gabrielle, 28906 Madrid (ES); NIELSEN, Frank, 21129 Hamburg (DE)

(56) References cited:
- EP-A1- 3 106 392
- CA-A1- 3 053 429
- US-A1- 2005 094 109
- US-A1- 2006 197 922
- US-A1- 2012 233 895

## Description

The invention relates to a vehicle, in particular an aircraft comprising a combination of active and passive lighting. The invention relates particularly to a vehicle comprising a photoluminescent exterior surface.

The outer visibility or aspect of a vehicle is generally fixed. The colors, indications and logos are usually painted on the body or skin of the vehicle, such that the vehicle must undergo a long maintenance operation for modifying its outer aspect. This is particularly the case for aircrafts.

Also, some vehicles, such as aircrafts are leased by some companies to others, such that each time they are leased to a different company they must be repainted to the colors of the new leasing company. Moreover, many airline companies now operates in cooperation with other, but only the colors and brands of the company owning the aircraft operating the line appear on the aircraft.

Besides, visibility of a vehicle is fixed by determined points at which lights are fixed, and these lights may only be lit or switched off between different phases of the operation of the vehicle. There may be a need for a different lighting of a vehicle depending on its operation: in flight, on ground, entering a harbor or an airport, landing, taking off, accelerating, decelerating, etc. Such information cannot flexibly be made visible to a person observing the vehicle. US 2005094109 discloses a system capable of creating viewable images in glass by using a projector which projects ultraviolet light to excite light emitting material. For example, drivers of automobiles may view images (e.g. map images) on their windshield while they are driving.

CN 109018394 discloses a method for illuminating a helicopter wing tip. by installing a emitter on a helicopter fuselage, and transmitting electromagnetic waves in the visible or invisible frequency band through a lower position of the trajectory of the wing tip of the rotating main rotor through the emitter. The wing tip encounters visible light or visible fluorescence generated by electromagnetic wave reflection in the visible or invisible light band, and observes the wing tip motion trajectory of the main rotor.

Such illumination system may be optimized as its energy consumption is relatively high for some vehicle applications, in particular in aircrafts in which the power resources must be spared.

Also, such illumination is not very discreet as a large area of the sky is illuminated by the emitter.

The invention aims to provide a vehicle with a good visibility.

The invention aims to provide a vehicle with reconfigurable outer illumination.

The invention aims to provide a vehicle which may provide discreet communication means.

The invention also aims to provide a vehicle with a low energy consumption, in particular a vehicle with a low energy consumption lighting device.

The invention proposes a vehicle according to claim 1.

In the whole text, the term 'light' is used to describe electromagnetic waves, or photons. The term 'light' is used indistinctly for visible and invisible light frequencies.

In the whole text, the term 'image' is used to describe any visual representation such as for example pictures, logos, letters, symbols, drawings, pattern, lines, etc. which may be of abstract nature or not.

The photoluminescent material may be a fluorescent or a phosphorescent material, or a combination of both. It may also be another type of photoluminescent material.

The photoluminescent layer may for example be a film adapted to be applied on a skin of an aircraft. The photoluminescent layer may also for example be a paint applied on the skin of the vehicle.

The passive surface is an exterior surface arranged on an outer skin of the vehicle. On an aircraft, the passive surface may for example be a fuselage surface, a wing surface, a tail surface - such as a vertical tail plane or a horizontal tail plane. On a ship, the passive surface may for example be the command cabin or the hull.

A vehicle according to the invention may thus be adapted to display information on its outer surface such as a brand, practical or technical information, communication messages, etc. More particularly, the invention allows to display maintenance or operation messages on an aircraft outer surface when the aircraft is on ground. It may also allow to display brands, and thus to quickly rebrand an aircraft. This may be of particular interest for lease companies. The invention also allows to display messages on the outside of the aircraft, which may permit very discreet communication between two aircrafts in particular during night flights. Such communication avoids any radio communication, and may be invisible to many communication detection systems.

The invention may also allow to enhance a display already present on the aircraft such as a painted logo, such as to increase its visibility, in particular in low ambient lighting conditions.

The light control device may be adapted to vary the direction and/or the shape of one or more light beams over time. The light control device may thus control which portions of the passive surface are illuminated by the light source at a predetermined moment. More particularly the light control device may be adapted to control the position of the light spot(s) formed by the light beam(s) on the passive surface. The light control device may thus vary the direction of one or more light beams over time so as to displace a spot at which a light beam impacts the passive surface along a path for obtaining a luminescent image on the passive surface. Thereby an image displayed by local luminescence of the passive surface may be finely controlled.

The light control device may be adapted to sweep the passive surface with one or more light beams. The light control device may be adapted to sweep the passive surface according to a path. The path may change over time. The path may be predetermined, based on an image to be projected on the passive surface. Alternatively or in combination, the path may be calculated based on some input data or may be random or pseudo-random. The path data may be stored in a memory. The memory may be onboard the aircraft.

The light control device may receive path data from one or more processing units, said path data being representative of an image to be obtained on the passive surface. The path data may comprise data representative of an image to be obtained on the passive surface.

The aircraft may comprise an input device for inputting image data. The input device may for example be a port for receiving image data from a third party device, a camera, a keyboard for receiving characters input from a user, etc.

The image may be fixed during a certain duration, or may be an image in a series of images to be projected on the passive surface so as to form a movie.

The path data may also comprise a duration of excitation of each location or area of the passive surface. A sweeping speed of the passive surface by one or more light beam(s) may thus vary along the path. This allows to modify the intensity and/or duration of the local luminescence on the passive surface.

Alternatively or in combination, at least part of the path along which the spot is displaced on the passive surface may be repeated, such that the passive surface portion corresponding to this repeated part of the path may have a higher intensity and/or duration of luminescence.

The vehicle may also comprise an image processing unit adapted to transform original image data received from a first device, into adapted image data. The image processing unit is adapted to transform original image data, according to the shape of the passive surface. This allows to represent the original image on the passive surface without or with minimal deformation due to the specific shape of the passive surface. For example the passive surface may generally be convex when it is an outer surface of an aircraft. An original image determined on a flat surface must be adapted to appear in the same ratios on a convex surface. The image processing unit may be onboard the vehicle or may be remote.

The light source may comprise at least one laser.

The light control device is adapted to control the direction of the laser beam so as to control the spot location of the laser beam on the passive surface.

Alternatively or in combination, the light source may comprise at least one LED. The light source may for example comprise a LED matrix.

The light source may be addressed and controlled by the control device, in particular in orientation and/or lighting power.

The light control device is adapted to mechanically control the orientation of at least part of the light source.

For example in a light source comprising a plurality of LED, the control device may be adapted to modify the orientation of one or more LEDs. The LEDs orientation may be controlled individually or in groups by the control device.

Similarly the control device may be adapted to modify the lighting power of one or more LEDs so as to dim them independently individually or in group(s).

The light source may comprise one or more refractive optical element. The refractive optical element may be configured for receiving light from the light source and for collimating the light received from the light source to produce one or more light beams. The refractive optical element may comprise one or more optical lens. The lens may be controlled by the light control device so as to modify characteristics of the light beam, such as, for example, a direction or a diffusion angle or a focal point of the light beam.

The light control device may comprise a mask for masking at least part of a light beam emitted by the light source.

The light control device may comprise a mask. In particular the light control device may comprise an active controlled mask which may filter a first portion of the light beam at a first instant and another portion of the light beam at another instant, depending on the value of an input to the active controlled mask. The light control device may for example comprise a LCD mask.

The light control device may comprise one or more controlled mirrors.

The light control device may individually control each mirror's orientation.

In particular one or more mirrors may be placed in parallel and/or in series along one or more paths of one or more light beam emitted by the light source. One or more light beam may thus be controlled in direction so as to illuminate one or another portion of the passive surface.

The mirrors may for example be part of a digital micromirror device (DMD). The mirrors may also be part of a mirror galvanometer, in particular a high speed mirror galvanometer.

The light control device may be adapted to control the light source in a pulse mode.

The energy consumption of the light source is thus greatly reduced, while the display on an aircraft may be maintained permanently, by the combination of a passive surface with relaxation time and a pulsed light source.

The frequency of the pulse mode may be adapted according to one or more characteristics of the passive surface, in particular of the photoluminescent layer. For example the frequency of the pulse mode may be adapted according to a relaxation time of the photoluminescent layer, to the chemical composition of the photoluminescent layer, to the thickness of the photoluminescent layer, etc.. The frequency of the pulse mode may also be adapted according to a power of the light source, in particular to a power per surface at the impact point between the light beam and the passive surface. The frequency of the pulse mode may also be adapted to the image to be displayed on the passive surface. The frequency of the pulse mode may also be adapted according to a distance between the laser source and the passive surface.

The light control device may be adapted to control a laser in a pulse mode.

The light control device may be adapted to control the intensity of the light emitted by the light source.

The intensity of the light emitted by the light source may be adapted according to a relaxation time of the photoluminescent layer. The intensity of the light emitted by the light source may also be adapted according to a power of the light source, in particular to a power per surface at the spot or impact point of the light beam and the passive surface. The intensity of the light emitted by the light source may also be adapted to the image to be displayed on the passive surface. The intensity of the light emitted by the light source may also be adapted according to a distance between the laser source and the passive surface.

More particularly the light control device may be adapted to control the intensity of the light beam. It may be adapted to locally control different portions of the light beam so as to dim or filter completely or partially one or more portion of the light beam and thereby modify the shape, in cross-section, of the light beam. The control device may comprise an active mask, such as for example a LCD mask to do so.

The vehicle comprises a reflective layer beneath the at least one photoluminescent layer.

The reflective layer is arranged beneath the photoluminescent layer in relation to an outer surface of the passive surface.

The passive surface may comprise one or more reflective layers.

A reflective layer below the photoluminescent layer allows to increase the light absorption of the photoluminescent layer. The photoluminescent layer may thus be more luminescent and/or for a longer time after having been hit by a light beam. The power consumed by a light source for displaying an image on the passive surface is thus limited.

The reflective layer may be a metallic or metallized layer. The reflective layer may reflect at least 75 % and beneficially at least 90 %, in some embodiments at least 95% of the light it receives from the light source.

The reflective layer may be directly beneath the photoluminescent layer, or may be separated from it by one or more intermediate layers. The intermediate layer(s) may be transparent or translucent to the light emitted by the light source.

The intermediate layer(s) may be transparent or translucent to the light reemitted by the photoluminescent layer. The intensity of the light received for an observer looking at the passive surface is thus particularly high in such embodiment according to the invention, because all light reemitted by the photoluminescent layer in an opposite direction is reflected by the reflecting layer towards the observer and cumulated to the light reemitted by the photoluminescent layer by the photoluminescent layer towards an outer surface of the passive surface.

The photoluminescent layer may comprise strontium aluminate.

The inventors have determined that photoluminescent layer comprising strontium aluminate are particularly adapted for use on a vehicle, and in particular on an aircraft. Strontium aluminate confers a very good luminescence to the photoluminescent layer. A vehicle and device according to the invention thereby consume less energy as a better luminescence of the photoluminescent layer allows to use light sources of lower power consumption or to let the light source switched off for a longer period between two successive excitation periods.

A high level of luminescence of the photoluminescent material making up the photoluminescent layer allows, for a same light source power, to use apply a thinner and thus lighter photoluminescent layer to a vehicle. This is particularly beneficial for aircrafts in which weight has a high impact on its operation costs and fuel consumption, and because the aerodynamic drag of an additional photoluminescent layer may be kept low.

Strontium aluminate also has a long life span, thereby providing a vehicle with low maintenance need because the photoluminescent layer does not need to be renewed often.

The light source may be adapted to emit light in the ultraviolet range of wavelength. In particular it may be adapted to emit light at a wavelength between 200 nm and 450 nm.

The photoluminescent layer may comprise pigmentation additives.

The pigmentation additives allow to obtain a color of the passive surface different than the color of the light emitted by the photoluminescent material of the photoluminescent layer.

The vehicle may comprise at least one top layer between the photoluminescent layer and the outer surface of the passive surface.

Each top layer is beneficially transparent or translucent to the light emitted by the light source and to the light reemitted by the photoluminescent layer.

The top layer may be a protecting layer such as a varnish.

The top layer may comprise a pigment.

The passive surface may comprise one or more top layers with the same or distinctive functions.

The photoluminescent layer is arranged on an outer skin of the vehicle.

The vehicle may be an aircraft. In particular the invention encompasses an aircraft according to claim 1.

In alternative possible embodiments, a light source may not be on the aircraft. The light source may be placed on another vehicle, on ground, on a building, etc. The light source may be adapted to excite a passive surface of an aircraft. Thus energy of the aircraft may not be used, but rather energy of another vehicle, or of a ground power network.

Some specific exemplary embodiments and aspects of the invention are described in the following description in reference to the accompanying figures.

Figure 1 is a schematic representation of functional elements of a vehicle according to the invention.

Figures 2a, 2b and 2c are schematic representations with a perspective view of an aircraft tail of an aircraft according to the invention.

Figure 3 is a schematic representation with a lateral view of an aircraft according to the invention.

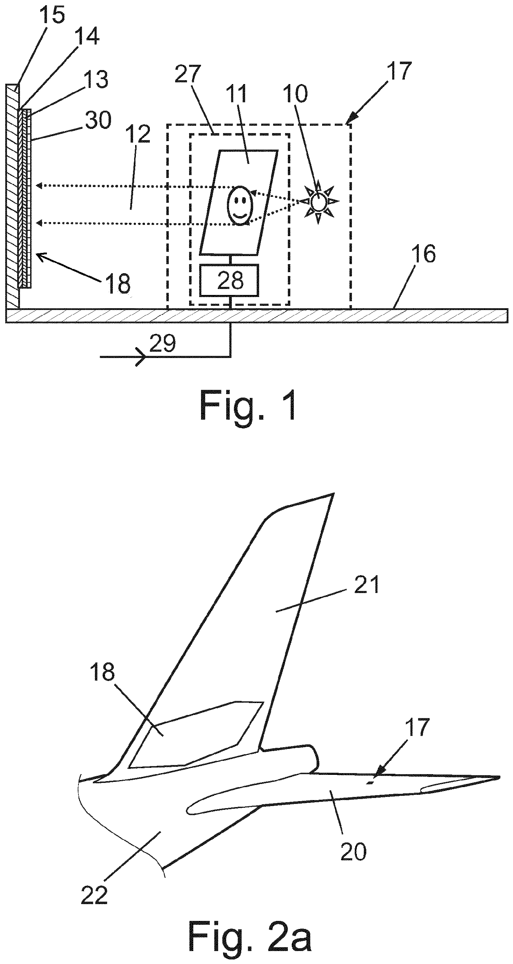

In Figure 1 a device according to the invention installed on a portion of a vehicle according to the invention is represented. The vehicle comprises a first structure 15 which may for example be a vertical tail plane of an aircraft, and a second structure 16, which at least partly has a direct view (with no intermediate structure or elements on at least a direct line between the first structure and the second structure) on at least part of a surface of the first structure 15. The second structure 16 may for example be a horizontal tail plane of an aircraft.

The first structure comprises a surface, part of which form a passive surface 18 according to the invention. The passive surface 18 of the first structure is adapted to be illuminated from the second structure 16. The passive surface 18 comprises a photoluminescent layer 13. The passive surface 18 also comprises an outer top layer 30. The top layer 30 may be a protection varnish such as an erosion protection varnish. The top layer 30 is chosen to be at least part, beneficially most, transparent to the light frequencies that may excite the photoluminescent layer 13. The top layer 30 may be transparent to the light emitted by the light source 10. The passive surface also comprises an inner layer, arranged beneath the photoluminescent layer 13, which is a reflective layer 14.

The device and aircraft further comprise a lighting device 17 arranged on, in or at proximity of the second structure 16. The device comprises a light source 10 and a control device 27. The lighting device 17 and in particular the light source 10 are adapted to project a light beam on the passive surface 18 of the first structure 15. In this embodiment, the light source 10 may be an array of LEDs adapted to produce a light beam 12.

The photoluminescent layer 13 is made of a photoluminescent material adapted to be excited by absorption of light from the light source.

The control device 27 comprises a controller 28 and a LCD mask 11. The lighting device comprises a lens (not represented) between the light source and the LCD mask 27. The controller 28 controls the LCD mask 27. The LCD mask 27 is placed along a light beam 12 emitted by the light source 10 so as to modify a shape of the cross section of the light beam. In particular the LCD mask 27 is adapted to at least partially filter the light beam 12 so as to project a shape on the passive surface 18. The LCD mask is adapted to modify the image projected on the passive surface.

The controller 28 also comprises an input 29 for receiving image data from a remote processing unit (not represented).

The light beam 12 is adapted to excite the photoluminescent layer 13 of the passive surface 18. The reflective layer 14 is adapted to reflect at least part, beneficially most of the residual light from the light beam 12 that may pass through the photoluminescent layer 13, such that the reflected light may be absorbed by the photoluminescent layer 13 on its way back.

The photoluminescent layer 13 may be applied as a paint directly on the reflective layer 14. The photoluminescent layer 13 may comprise strontium aluminate.

The control device 27 may also be adapted to control the light source 10, in particular to switch it on or off or to dim its light power. The control device may power the light source 10 in a pulse mode. This allows to spare electrical power, while maintaining the display of an image on the passive surface 18 for a longer period than the powering period of the light source.

The passive surface 18 may additionally comprise one or more top layer above the photoluminescent layer 13, such as a transparent varnish for example. Such layer may be an erosion protection layer to protect the photoluminescent layer 13 and more generally the skin of the aircraft against air, water and sand erosion.

The passive surface 18 may also comprise one or more intermediate layers between the reflective layer 14 and the photoluminescent layer 13.

The passive surface 18 may also comprise one or more layers underneath the reflective layer 14. In particular, the passive surface 18 may also comprise one or more layers between the reflective layer 14 and the skin of the vertical tail plane 15.

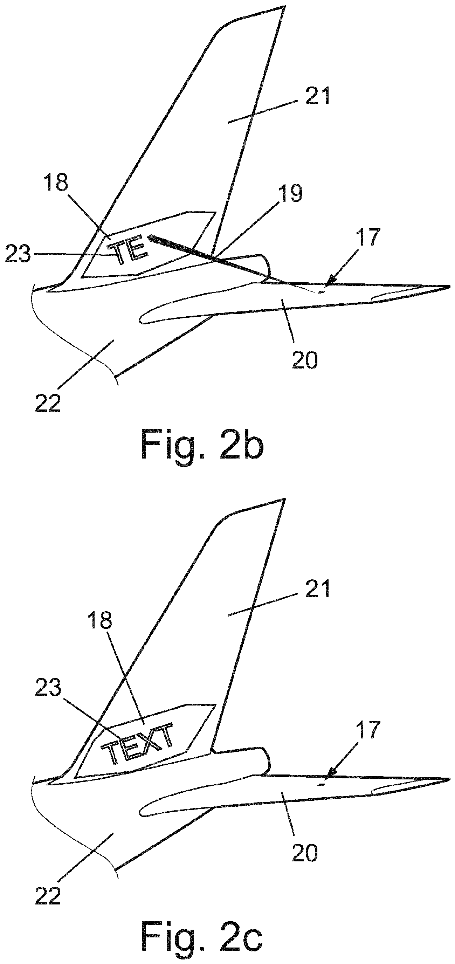

Figures 2a, 2b, 2c represent a tail of an aircraft according to the invention. In their succession, the figures 2a, 2b, 2c display an operation method of a device according to the invention.

The tail comprises a vertical tail plane 21, a horizontal tail plane 20 and a fuselage 22.

As represented on figure 2a, part of the surface of the vertical tail plane is a passive surface 18 according to the invention comprising at least one photoluminescent layer.

A lighting device 17 is integrated in the horizontal tail plane 20 and is adapted to project light on the passive surface 18. In this embodiment, the lighting device 27 comprises a laser as a light source and the control device comprises a mirror galvanometer for controlling the direction of the laser light beam.

The lighting device is beneficially integrated in the horizontal tail plane 20 so as to be level with the skin surface of the horizontal tail plane 20.

In figure 2a, the lighting device is not activated.

In figure 2b, the lighting device is activated. It produces a light beam 19 towards the passive surface 18 of the vertical tail plane 21. The control device 27 is adapted to control the light beam such that the light beam sweeps the passive surface along a predetermined path. In the presented example the laser light beam has swept the passive surface so as to form an image 23, here comprising the letters T and E as example, and pursues on the passive surface. The control device is adapted to sweep the passive surface at a sweeping frequency at which an image is refreshed by a renewed or modified excitation of the passive surface 18. The sweeping frequency may be adjusted depending on the surface of the passive surface 18 and/or depending on the surface of the passive surface that must be excited during one sweep of the passive surface 18.

The laser may be controlled by the control device in a pulse mode. The frequency of the pulse mode, or pulse frequency, is higher than the sweeping frequency. The pulse frequency may be at least 10 times higher than the sweeping frequency, and in some embodiments the pulse frequency may be at least 100 times higher than the sweeping frequency. The pulse frequency may be adjusted depending on the surface of the passive surface 18 and/or depending on the surface of the passive surface that must be excited during one sweep of the passive surface 18.

The sweeping frequency and the pulse frequency may be adjusted depending on each other.

The photoluminescent layer of the passive surface 18 reemits light in its areas that were hit by the laser light beam, such that the display of a first portion of the image 23 (the letters T and E) remains while the light beam continues to sweep the passive surface.

In figure 2c, the lighting device is not activated. The passive surface reemits light in its areas that were hit by the laser light beam, such that the display of the complete image 23 (here the letters T, E, X, T) remains while the light source is switched off.

The invention provides an easy, quick and flexible way to change the display on a vehicle, in particular on an aircraft.

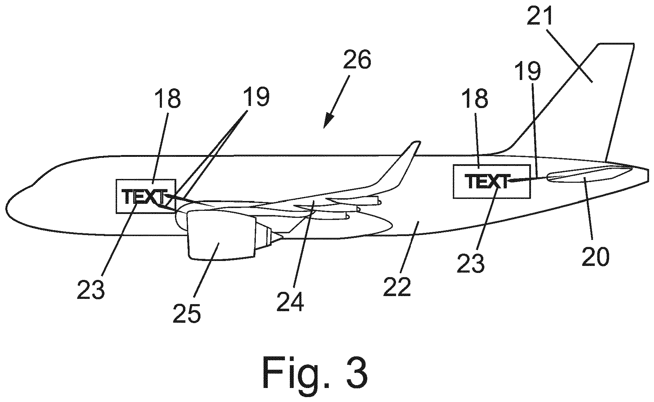

In figure 3, an aircraft 26 according to the invention is represented. it comprises a fuselage 22, a tail comprising a vertical tail plane 21 and a horizontal tail plane 20, wings 24 and engines with engines nacelles 25.

It further comprises a plurality of lighting devices. A first lighting device is placed towards a leading edge of the vertical tail plane 20. This first lighting device is adapted to produce and control a light beam 19 adapted to illuminate an aft portion of the fuselage 22. The aft portion comprises a passive surface 18 which the light beam may excite. In the example represented, portions of the passive surface 18 are being excited by the light beam which represent an image (here the letters T, E, X, T).

A second lighting device is placed on the leading edge of a wing 24. Similarly, the second lighting device is adapted to produce and control a plurality of light beams 19 adapted to illuminate a front portion of the fuselage 22. The front portion comprises a passive surface 18 which the light beam may excite. In the example represented, portions of the passive surface 18 are being excited by the light beams 19 which represent an image (here the letters T, E, X, T).

Such images or text on a side fuselage of an aircraft may allow very discrete communication to a crew in a second aircraft flying in parallel to an aircraft according to the invention.

Additionally, one or more lighting device(s) may be adapted to project an image on a passive surface on a nacelle 25. This may allow to display specific indications to ground employees when the aircraft is on ground in an airport.

The invention is not limited to the specific embodiments herein disclosed as examples. The invention also encompasses other embodiments not herein explicitly described, and is limited by the scope of the appended claims.

## Claims

1. Vehicle (26) comprising:
- at least one predetermined surface, called passive surface (18), being an exterior surface of the vehicle and comprising at least one photoluminescent layer (13),
- at least one light source (10), adapted to emit at least one light beam (12, 19) towards the passive surface (18),
- a light control device (27) adapted to control at least one of a direction and a shape of the light beam (12, 19),
**characterized in that** :
- it comprises a reflective layer (14) beneath the at least one photoluminescent layer (13),
- the passive surface (18) is arranged on an outer skin of the vehicle (26).

2. Vehicle according to claim 1, further **characterized in that** the light source (10) comprises at least one laser.

3. Vehicle according to any of claim 1 or 2, further **characterized in that** the light control device (27) comprises a mask (11) for masking at least part of a light beam (12, 19) emitted by the light source (10).

4. Vehicle according to any of claim 1 to 3, further **characterized in that** the light control device (27) comprises one or more controlled mirrors.

5. Vehicle according to any of claim 1 to 4, further **characterized in that** the light control device (27) is adapted to mechanically control the orientation of at least part of the light source (10).

6. Vehicle according to any of claim 1 to 5, further **characterized in that** the light control device (27) is adapted to control the light source (10) in a pulse mode.

7. Vehicle according to any of claim 1 to 6, further **characterized in that** the light control device (27) is adapted to control a laser in a pulse mode.

8. Vehicle according to any of claim 1 to 7, further **characterized in that** the light control device (27) is adapted to control the intensity of the light beam (12, 19).

9. Vehicle according to any of claim 1 to 8, further **characterized in that** the photoluminescent layer (13) comprises strontium aluminate.

10. Vehicle according to any of claim 1 to 9, further **characterized in that** the photoluminescent layer (13) comprises pigmentation additives.

11. Vehicle according to one of claim 1 to 10, further **characterized in that** it comprises at least one top layer (30) between the photoluminescent layer (13) and an outer face of the passive surface (18).

12. Vehicle according to one of claim 1 to 11, further **characterized in that** it is an aircraft (26).

## Patentansprüche

1. Fahrzeug (26), Folgendes umfassend:
- mindestens eine vorbestimmte Oberfläche, passive Oberfläche (18) genannt, die eine äußere Oberfläche des Fahrzeugs ist und mindestens eine Photolumineszenzschicht (13) umfasst,
- mindestens eine Lichtquelle (10), die eingerichtet ist, um mindestens einen Lichtstrahl (12, 19) in Richtung der passiven Oberfläche (18) zu emittieren,
- eine Lichtsteuerungsvorrichtung (27), die eingerichtet ist, um mindestens eine Richtung oder eine Gestalt des Lichtstrahls (12, 19) zu steuern,
**dadurch gekennzeichnet, dass**:
- es eine reflektierende Schicht (14) unter der mindestens einen Photolumineszenzschicht (13) umfasst,
- die passive Oberfläche (18) auf einer Außenhaut des Fahrzeugs (26) angeordnet ist.

2. Fahrzeug nach Anspruch 1, weiterhin **dadurch gekennzeichnet, dass** die Lichtquelle (10) mindestens einen Laser umfasst.

3. Fahrzeug nach einem der Ansprüche 1 oder 2, weiterhin **dadurch gekennzeichnet, dass** die Lichtsteuerungsvorrichtung (27) eine Maske (11) zum Maskieren mindestens eines Teils eines Lichtstrahls (12, 19) umfasst, der von der Lichtquelle (10) emittiert wird.

4. Fahrzeug nach einem der Ansprüche 1 bis 3, weiterhin **dadurch gekennzeichnet, dass** die Lichtsteuerungsvorrichtung (27) einen oder mehrere gesteuerte Spiegel umfasst.

5. Fahrzeug nach einem der Ansprüche 1 bis 4, weiterhin **dadurch gekennzeichnet, dass** die Lichtsteuerungsvorrichtung (27) eingerichtet ist, um die Orientierung mindestens eines Teils der Lichtquelle (10) mechanisch zu steuern.

6. Fahrzeug nach einem der Ansprüche 1 bis 5, weiterhin **dadurch gekennzeichnet, dass** die Lichtsteuerungsvorrichtung (27) eingerichtet ist, um die Lichtquelle (10) in einer Impulsbetriebsart zu steuern.

7. Fahrzeug nach einem der Ansprüche 1 bis 6, weiterhin **dadurch gekennzeichnet, dass** die Lichtsteuerungsvorrichtung (27) eingerichtet ist, um einen Laser in einer Impulsbetriebsart zu steuern.

8. Fahrzeug nach einem der Ansprüche 1 bis 7, weiterhin **dadurch gekennzeichnet, dass** die Lichtsteuerungsvorrichtung (27) eingerichtet ist, um die Intensität des Lichtstrahls (12, 19) zu steuern.

9. Fahrzeug nach einem der Ansprüche 1 bis 8, weiterhin **dadurch gekennzeichnet, dass** die Photolumineszenzschicht (13) Strontiumaluminat umfasst.

10. Fahrzeug nach einem der Ansprüche 1 bis 9, weiterhin **dadurch gekennzeichnet, dass** die Photolumineszenzschicht (13) Pigmentierungszusatzstoffe umfasst.

11. Fahrzeug nach einem der Ansprüche 1 bis 10, weiterhin **dadurch gekennzeichnet, dass** es mindestens eine Deckschicht (30) zwischen der Photolumineszenzschicht (13) und einer Außenseite der passiven Oberfläche (18) umfasst.

12. Fahrzeug nach einem der Ansprüche 1 bis 11, weiterhin **dadurch gekennzeichnet, dass** es ein Flugzeug (26) ist.

## Revendications

1. Véhicule (26) comprenant :
- au moins une surface prédéterminée, appelée surface passive (18), qui est une surface extérieure du véhicule et comprend au moins une couche photoluminescente (13),
- au moins une source lumineuse (10), adaptée pour émettre au moins un faisceau lumineux (12, 19) vers la surface passive (18),
- un dispositif de commande de lumière (27), adapté pour commander au moins une direction et une forme du faisceau lumineux (12, 19),
**caractérisé en ce que** :
- il comprend une couche réfléchissante (14) sous l'au moins une couche photoluminescente (13),
- la surface passive (18) est agencée sur un revêtement extérieur du véhicule (26).

2. Véhicule selon la revendication 1, **caractérisé en outre en ce que** la source lumineuse (10) comprend au moins un laser.

3. Véhicule selon l'une quelconque des revendications 1 ou 2, **caractérisé en outre en ce que** le dispositif de commande de lumière (27) comprend un masque (11) pour masquer au moins une partie d'un faisceau lumineux (12, 19) émis par la source lumineuse (10).

4. Véhicule selon l'une quelconque des revendications 1 à 3, **caractérisé en outre en ce que** le dispositif de commande de lumière (27) comprend un ou plusieurs miroirs commandés.

5. Véhicule selon l'une quelconque des revendications 1 à 4, **caractérisé en outre en ce que** le dispositif de commande de lumière (27) est adapté pour commander mécaniquement l'orientation d'au moins une partie de la source lumineuse (10).

6. Véhicule selon l'une quelconque des revendications 1 à 5, **caractérisé en outre en ce que** le dispositif de commande de lumière (27) est adapté pour commander la source lumineuse (10) en mode impulsionnel.

7. Véhicule selon l'une quelconque des revendications 1 à 6, **caractérisé en outre en ce que** le dispositif de commande de lumière (27) est adapté pour commander un laser en mode impulsionnel.

8. Véhicule selon l'une quelconque des revendications 1 à 7, **caractérisé en outre en ce que** le dispositif de commande de lumière (27) est adapté pour commander l'intensité du faisceau lumineux (12, 19).

9. Véhicule selon l'une quelconque des revendications 1 à 8, **caractérisé en outre en ce que** la couche photoluminescente (13) comprend de l'aluminate de strontium.

10. Véhicule selon l'une quelconque des revendications 1 à 9, **caractérisé en outre en ce que** la couche photoluminescente (13) comprend des additifs de pigmentation.

11. Véhicule selon l'une des revendications 1 à 10, **caractérisé en outre en ce qu'**il comprend au moins une couche supérieure (30) entre la couche photoluminescente (13) et une face extérieure de la surface passive (18).

12. Véhicule selon l'une des revendications 1 à 11, **caractérisé en outre en ce qu'**il s'agit d'un aéronef (26) .
